(19) **Europäisches Patentamt**

**European Patent Office**

**Office européen des brevets**

(11) **EP 1 316 414 A1**

(12) **EUROPÄISCHE PATENTANMELDUNG**

(43) Veröffentlichungstag:
   **04.06.2003   Patentblatt 2003/23**

(51) Int Cl.⁷: **B32B 15/08**, B32B 27/40

(21) Anmeldenummer: **02025571.7**

(22) Anmeldetag: **15.11.2002**

(84) Benannte Vertragsstaaten:
   **AT BE BG CH CY CZ DE DK EE ES FI FR GB GR
   IE IT LI LU MC NL PT SE SK TR**
   Benannte Erstreckungsstaaten:
   **AL LT LV MK RO SI**

(30) Priorität: **28.11.2001   DE 10158491**

(71) Anmelder: **Bayer Aktiengesellschaft
   51368 Leverkusen (DE)**

(72) Erfinder: **Rasshofer, Werner, Dr.
   51061 Köln (DE)**

(54) **Metall-Polyurethan-Laminate**

(57)   Gegenstand der Erfindung sind tiefziehfähige Laminate aus Metall und kompakten oder zelligen Polyurethanharzen sowie Verfahren zu deren Herstellung. Die Polyurethanharze weisen ein Elastizitätsmodul <250MPa auf.

EP 1 316 414 A1

**Beschreibung**

Gegenstand der Erfindung sind Laminate aus Metall und kompakten oder zelligen Polyurethanharzen sowie Verfahren zu deren Herstellung.

Laminate aus Stahl und Polypropylen werden im Automobilbau bereits eingesetzt, beispielsweise für Armaturenbretter, Dachelemente, Verkleidungen, Gehäuseteile, Motorhauben etc. Solche Materialien werden von Stahlfirmen wie Thyssen oder Arcelor angeboten. Diese Laminate weisen den großen Nachteil auf, dass sie wegen der zu geringen Temperaturbeständigkeit des Polypropylens nicht e-coat lackiert werden können und so nur eine eingeschränkte Verwendbarkeit im Automobilbau aufweisen, insbesondere nicht für Karosserieelemente verwendet werden können.

WO 98/21029 offenbart laminierte Sandwichbauteile für den Schiffsbau, bei denen zwei Stahlplatten durch einen Kern aus Polyurethan-Elastomer verbunden sind. Die Stahlplatten haben eine Dicke von 6 bis 25 mm, das Polyurethan-Elastomer weist eine Zugfestigkeit von 20 bis 55 MPa, ein Biegemodul von 2 bis 104 MPa, eine Dehnung von 100-800 % und eine Härte von Shore 70A bis Shore 80D auf.

WO 99/64233 offenbart Verbundelemente mit der Schichtstruktur Metall (2-20 mm) / kompaktes Polyisocyanat-Polyadditionsprodukt (10-100 mm) / Metall (2-20 mm). Das Polyisocyanat-Polyadditionsprodukt weist ein Elastizitätsmodul von > 275 MPa im Temperaturbereich von -45 bis +50°C, eine Adhäsion zum Metall von > 4 MPa, eine Dehnung von > 30 % im Temperaturbereich von -45 bis +50°C, eine Zugfestigkeit von > 20 MPa und eine Druckfestigkeit von > 20 MPa auf.

US 6 050 208 beschreibt Laminate für den Schiffsbau, bei denen die Kunststoffschicht ein Steifigkeit von $\geq$ 250 MPa aufweist.

Solche Laminate sind für den nicht-marinen Fahrzeugbau nicht geeignet. Insbesondere ist eine Tiefziehfähigkeit der Blechlaminate bei jederzeitiger starker Haftung zwischen PU und Metallschicht nicht gegeben.

Gegenstand der Erfindung sind Verbundelemente, die folgende Schichtfolge aulweisen:

B1) eine 0,05 bis 1,0 mm dicke Schicht aus Metall,
A) eine 0,05 bis 10 mm dicke Schicht aus Polyurethanharz,
B2) eine 0,05 bis 1,0 mm dicke Schicht aus Metall.

Die Schichten B 1 und B2 weisen bevorzugt die gleiche Dicke auf. Als Metalle können alle im Fahrzeugbau üblicherweise in luft-, wasser- oder erdgebundenen Fahrzeugen eingesetzten Metalle Verwendung finden, insbesondere Stahl, Aluminium, Magnesium und die gängigen Legierungen. Bevorzugtes Metall ist Stahl. Besonders bevorzugt sind hierfür unmodifizierter Stahl und oberflächenmodifizierte Stähle für Karosseriebleche. Solche Modifizierungen können anorganischer Natur (z.B. Verzinkung, Chromatierung, Phosphatierung) oder organischer Natur (z.B. durch Epoxyde oder Polyurethane) sein. Die innere Schicht A besteht aus kompakten und/oder zelligen Polyurethanharzen. Diese werden hergestellt durch Umsetzung a) einer Polyisocyanatkomponente, b) einer Polyolkomponente, gegebenenfalls c) Vernetzern und/oder Kettenverlängerern, gegebenenfalls d) Katalysatoren, gegebenenfalls e) Wasser als Treibmittel, gegebenenfalls f) Füll- und Verstärkungsstoffen und gegebenenfalls g) weiteren Hilfs- und Zusatzstoffen.

Als Ausgangskomponente a) für das erfindungsgemäße Verfahren eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der
n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten.

Bevorzugt eingesetzt werden die technisch leicht zugänglichen Polyisocyanate, z.B. das 2,4- und 2,6-Toluylendiisocyanat sowie beliebige Gemische dieser Isomeren (TDI), Polyphenyl-polymethylen-polyisocyanate, wie sie durch Anilin-Formaldehyd-Kondensation und anschließende Phosgenierung hergestellt werden ("rohes MDI"), höherkernige Isocyanate der Diphenylmethandiisocyanat-Reihe (pMDI-Typen) sowie Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich von 2,4-und/oder 2,6-Toluylendiisocyanat bzw. von 4,4'- und/oder 2,4'-Diphenylmethandiisocyanat ableiten. Geeignet sind auch Naphthylen-1,5-diisocyanat oder Gemische der genannten Polyisocyanate. Besonders bevorzugt wird erfindungsgemäß rohes MDI eingesetzt.

Als Polyolkomponente b) eignen sich Polyole mit mindestens zwei gegen Isocyanatgruppen reaktiven H-Atomen; vorzugsweise werden Polyesterpolyole und Polyetherpolyole eingesetzt, besonders bevorzugt Polyetherpolyole. Solche Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das reaktive Wasserstoffatome gebunden enthält oder durch kationische Polymerisation von Alkylenoxiden in Gegenwart von Lewis-Säuren wie Antimonpentachlorid oder Bortriuorid-Etherat. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermolekül kommen Wasser oder mehrwertige Alkohole in Betracht, wie Ethylenglykol, 1,2-Propandiol und 1,3-Propandiol, Diethylenglykol, Dipropylenglykol, 1,4-Butandiol, Glycerin, Trimethylolpropan, Pentaerythrit, Sorbit, Saccharose usw. Die Polyetherpolyole, vorzugsweise Polyoxypropylenpolyoxyethylen-Polyole, besitzen eine Funktionalität von 2 bis 8 und zahlenmittlere Molekulargewichte von 800 bis 18.000 g/mol, vorzugsweise 1.000 bis 4.000 g/mol.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 Kohlenstoffatomen hergestellt werden. Als Dicarbonsäuren kommen beispielsweise in Betracht: Bernsteinsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäure-mono und/oder -diester von Alkoholen mit 1 bis 4 Kohlenstoffatomen oder Dicarbonsäureanhydride eingesetzt werden. Vorzugsweise verwendet werden Dicarbonsäuregernische aus Bernstein-, Glutar- und Adipinsäure in Mengenverhältnissen von beispielsweise 20 bis 35 / 35 bis 50 / 20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,5-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. ω-Hydroxycapronsäure und Hydroxyessigsäure.

Zur Herstellung der Polyesterpolyole werden die organischen Polycarbonsäuren und/oder deren Derivate mit mehrwertigen Alkoholen vorteilhafterweise im Molverhältnis von 1 : 1 bis 1,8, vorzugsweise 1 : 1,05 bis 1,2 polykondensiert. Die erhaltenen Polyesterpolyole besitzen vorzugsweise eine Funktionalität von 2 bis 3, insbesondere 2 bis 2,6 und ein zahlenmittleres Molekulargewicht von 400 bis 6.000, vorzugsweise 800 bis 3.500.

Als geeignete Polyesterpolyole sind ferner Hydroxylgruppen aufweisende Polycarbonate zu nennen. Als Hydroxylgruppen aufweisende Polycarbonate kommen solche der an sich bekannten Art in Betracht, die beispielsweise durch Umsetzung von Diolen, wie 1,2-Propandiol, 1,4-Butandiol, 1,6-Hexandiol, Diethylenglykol, Trioxyethylenglykol und/oder Tetraoxyethylenglykol mit Diarylcarbonaten, z.B. Diphenylcarbonat oder Phosgen hergestellt werden können.

Zur Herstellung der erfindungsgemäßen PUR-Elastomeren können außer den Polyolen b) als Komponente c) niedermolekulare difunktionelle Kettenverlängerungsmittel, niedermolekulare, vorzugsweise tri- oder tetrafunktionelle Vernetzungsmittel oder Mischungen aus Kettenverlängerungs- und Vernetzungsmitteln verwendet werden.

Derartige Kettenverlängerungs- bzw. Vernetzungsmittel c) werden eingesetzt zur Modifizierung der mechanischen Eigenschaften, insbesondere der Härte der PUR-Elastomeren. Geeignete Kettenverlängerungsmittel wie Alkandiole, Dialkylenglykole und Polyalkylenpolyole und Vernetzungsmittel, z.B. 3- oder 4-wertige Alkohole und oligomere Polyalkylenpolyole mit einer Funktionalität von 3 bis 4, beispielsweise hohe OH-Zahlen aufweisende Addukte von Ethylenoxid und/oder Propylenoxid an Trimethylolpropan oder Glycerin, besitzen üblicherweise Molekulargewichte < 800, vorzugsweise von 18 bis 400 und insbesondere von 60 bis 300. Als Kettenverlängerungsmittel vorzugsweise verwendet werden Alkandiole mit 2 bis 12, vorzugsweise 2, 4 oder 6 Kohlenstoffatomen, z B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z.B. 1,2-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.-butyl-, N,N'-Dicyclohexyl-4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin.

Die Verbindungen der Komponente c) können in Form von Mischungen oder einzeln eingesetzt werden. Verwendbar sind auch Gemische aus Kettenverlängerungs- und Vernetzungsmitteln.

Zur Einstellung der Härte der PUR-Elastomeren können die Aufbaukomponenten b) und c) in relativ breiten Mengenverhältnissen variiert werden, wobei die Härte mit zunehmenden Gehalt an Komponente c) in der Reaktionsmischung ansteigt.

In Abhängigkeit von der gewünschten Härte können die erforderlichen Mengen der Aufbaukomponenten b) und c) auf einfache Weise experimentell bestimmt werden. Vorteilhafterweise verwendet werden 1 bis 100 Gew.-Teile, vorzugsweise 3 bis 50 Gew.-Teile des Kettenverlängerungs- und/oder Vernetzungsmittels c), bezogen auf 100 Gew.-Teile der höhermolekularen Verbindungen b).

Bevorzugt werden di Komponenten b) und c) so gewählt, dass sie zusammen eine OH-Zahl von 100 bis 500 mg KOH/g und eine Funktionalität von 2 bis 8 aufweisen.

Als Komponente d) können dem Fachmann geläufige Katalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoalkyl)-piperazine (DE-OS 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-OS 17 20 633), Bis-(dialkylamino)-alkylether (US-PS 3 330 782, DE-AS 10 30 558, DE-OS 18 04 361 und 26 18 280) sowie Amidgruppen (vorzugsweise Formamidgruppen) aufweisende tertiäre Amine gemäß DE-OS 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-OS 27 32 292. Als Katalysatoren können ferner Silaamine mit Kohlenstoff-Silizium-Bindungen, wie sie in US-PS 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 17 69 043). Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in DE-OS 20 62 286, 20 62 289, 21 17 576, 21 29 198, 23 30 175 und 23 30 211 beschrieben. Erfindungsgemäß können auch organische Metallverbindungen als Katalysatoren verwendet werden. Organische Zinnverbindungen sind erfindungsgemäß als Katalysatoren bevorzugt. Als organische Zinnverbindungen kommen neben schwefelhaltigen Verbindungen wie Di-n-octyl-zinn-mercaptid (US-PS 3 645 927) vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Amino-pyridinen oder Hydrazinopyridinen (DE-OS 24 34 185, 26 01 082 und 26 03 834).

Weitere Vertreter von erfindungsgemäß zu verwendenden Katalysatoren sowie Einzelheiten über die Wirkungsweise der Katalysatoren sind in R. Vieweg, A. Höchtlen (Hrsg.): "Kunststoff-Handbuch", Band VII, Carl-Hanser-Verlag, München 1966, S.96-102 beschrieben.

Die Katalysatoren bzw. Katalysatorkombinationen werden in der Regel in einer Menge zwischen etwa 0,001 und 10 Gew.-%, insbesondere 0,01 bis 1 Gew.-%, bezogen auf die Gesamtmenge an Verbindungen mit mindestens zwei gegenüber Isocyanaten reaktionsfähigen Wasserstoffatomen, eingesetzt.

Erfindungsgemäß können in Abwesenheit von Feuchtigkeit und physikalisch oder chemisch wirkenden Treibmitteln kompakte Polyurethanharze hergestellt werden. Zur Herstellung von zelligen, vorzugsweise mikrozellularen Polyurethanharzen findet als Treibmittel e) Wasser Verwendung, das mit den organischen Polyisocyanaten a) oder mit Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Sofern der Polyurethanformulierung zusätzlich Wasser zugegeben wird, um ein Polyurethanharz gewünschter Dichte herzustellen, wird dieses üblicherweise in Mengen von 0,01 bis 2,0 Gew.-%, bevorzugt von 0,2 bis 1,2 Gew.-%, bezogen auf das Gewicht der Aufbaukomponenten b) und c), verwendet.

Der Reaktionsmischung zur Herstellung der Polyurethanharze können gegebenenfalls Füll- und Verstärkungsstoffe f) zugegeben werden. Beispiele für geeignete Füll- und Verstärkungsstoffe sind silikatische Mineralien, beispielsweise Schichtsilikate wie Antigorit, Serpentin, Hornblenden, Amphibile, Chrisotil, Talkum; Metalloxide wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Mineralien wie Asbest, Wollastonit und insbesondere Glasfasern verschiedener Länge, die gegebenenfalls geschlichtet sein können. Füllstoffe können einzeln oder als Gemische verwendet werden. Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten b) und c), zugegeben.

Der Reaktionsmischung zur Herstellung der Polyurethanharze können gegebenenfalls Zusatzstoffe g) einverleibt werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 25 58 523. Geeignet sind auch andere Organopolysiloxane, oxyethylierte Alkylphenole, oxyethylierte Fettalkohole, Paraffinöle, Ricinusöl- bzw. Ricinolsäureester, Türkischrotöl und Erdnußöl und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile des Polyols b) angewandt. Zugesetzt werden können auch Reaktionsverzögerer z.B. sauer reagierende Stoffe wie Salzsäure, oder organische Säuren und Säurehalogenide, ferner an sich bekannte Zellregler wie Paraffine oder Fettalkohole oder Dimethylpolysiloxane sowie Pigmente oder Farbstoffe und an sich bekannte Flammschutzmittel, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Die Herstellung der erfindungsgemäßen Polyurethanharze kann nach verschiedenen Varianten erfolgen. So können beispielsweise Mischungen aus Polyol b), gegebenenfalls Kettenverlängerungs- und/oder Vernetzungsmittel c), gegebenenfalls Katalysator d) sowie gegebenenfalls e) Wasser, gegebenenfalls f) Füll- und Verstärkungsstoffe und gegebenenfalls g) Hilfs- und Zusatzstoffe, umgesetzt werden mit organischen Polyisocyanaten a). In einer anderen Ausführungsform des Verfahrens werden isocyanatgruppenhaltige Prepolymere aus a) und b) umgesetzt mit Kettenverlängerungs- und/oder Vernetzungsmittel c), oder mit Mischungen aus Teilmengen von b) und c), oder Mischungen aus Teilmengen von b), c) und Wasser, oder vorzugsweise mit Mischungen aus c) und Wasser.

Die erfindungsgemäßen Polyurethanharze können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden. Vorzugsweise werden sie nach dem one-shot-Verfahren hergestellt.

Die Komponenten werden in solchen Mengen zur Umsetzung gebracht werden, dass das Äquivalenzverhältnis der NCO-Gruppen der Polyisocyanate a) zur Summe der gegenüber Isocyanatgruppen reaktiven Wasserstoffe der Komponenten b) und c) sowie gegebenenfalls e) 0,7:1 bis 1,2:1, vorzugsweise 0,8:1 bis 1,0:1 und insbesondere 0,8:1 bis 0,9:1 beträgt.

Werden sie ohne Füll- und Verstärkungsstoffe hergestellt, so haben die erfindungsgemäßen Polyurethanharze eine durchschnittliche Dichte von 0,3 bis 1,1 g/cm$^3$. Sie weisen einen Elastizitätsmodul von < 250 MPa auf. Sie haben eine thermische Beständigkeit > 200°C, d.h. sie zeigen bei 30minütigem Tempern bei 200°C einen Massenverlust von < 1 Gew.-%.

Die erfindungsgemäßen Verbundelementen können hergestellt werden, indem die Polyurethan-Reaktionsmischung zwischen zwei 0,05 bis 1,0 mm dicke Schichten aus Metall (B1 und B2) eingebracht und dort ausgehärtet wird. Dazu können z.B. die Deckschichten B1 und B2 in einer Form oder mittels Abstandshaltern in dem gewünschten Abstand vorjustiert und der Zwischenraum mit der Reaktionsmischung ausgefüllt werden. In einer kontinuierlichen Herstellvariante wird die Reaktionsmischung kontinuierlich zwischen zwei kontinuierlich zugeführte Metallbleche eingefüllt. Das entstehende Verbundelement durchläuft anschließend Walzen und wird so auf die gewünschte Dicke gebracht. Alternativ kann die Reaktionsmischung auch zunächst auf Schicht B 1 aufgebracht und dann mit Schicht B2 abgedeckt werden. Bei allen Herstellmethoden wird die Reaktionsmischung zwischen den Metallschichten B 1 und B2 ausgehärtet und bindet so an die Metallschichten.

Zur Verbesserung der Haftung zwischen Polyurethanharz und den Metallschichten kann die Kontaktfläche der Metallschichten mit einem Haftprimer vorbehandelt werden. Geeignete Primer auf Polyurethan- oder Epoxidbasis sind im Prinzip bekannt. Geeignet sind auch anorganische Primer, z.B. Natriumorthosilikat (Wasserglas).

Die erfindungsgemäßen Laminate werden bevorzugt im Kraftfahrzeugbau und Flugzeugbau eingesetzt, z.B. zur Herstellung von Karosserieteilen, Verkleidungen, Gehäuseteilen, Motorhauben, Dachelementen etc.

Die erfindungsgemäßen Laminate bieten gegenüber Bauteilen, die ganz aus Metall gefertigt sind oder den Stahl-Kunststoff-Laminaten des Standes der Technik den Vorteil geringeren Gewichts (insbesondere bei Verwendung zelliger Polyurethanharze). Sie weisen eine deutlich bessere Temperaturbeständigkeit auf als die Stahl-Kunststoff-Laminate des Standes der Technik. Da die verwendeten Polyurethanharze einen Elastizitätsmodul von <250 MPa aufweisen, lassen sich die erfindungsgemäßen Laminate vorteilhaft durch Tiefziehen verarbeiten, was für dreidimensionale Artikel wie Kraftfahrzeugteile (Motorhauben etc.) erforderlich ist. Zudem zeigen die erfindungsgemäßen Laminate bessere Schalldämmeigenschaften als reine Metallteile oder Stahl-Kunststoff-Laminate, die Kunststoffe mit höherem E-Modul enthalten.

**Beispiele**

**Beispiel 1**

Zur Herstellung eines Laminats wurde folgendes Polyurethan-Reaktionssystem eingesetzt:

Polyolformulierung (Komponente A)

| | |
|---|---|
| 70,30 Gew.-Teile | eines glyceringestarteten Polyetherpolyols mit einer zahlenmittleren Molmasse von 6011 g/mol, der 82,3 Gew.-% PO und 17,7 Gew.-% EO enthält, |
| 20,00 Gew.-Teile | eines Trimethylolpropan-gestarteten Polyoxypropylenpolyols mit einer zahlenmittleren Molmasse von 306 g/mol, |
| 7,00 Gew.-Teile | 1,4-Butandiol, |
| 2,00 Gew.-Teile | eines polymeren, einbaufähigen Katalysators (Bayfill® Zusatzmittel VP.PU 59IF08, Bayer AG) |

Die Polyolformulierung hatte eine OH-Zahl von 221.

Isocyanatkomponente (Komponente B)

Roh-MDI mit einem Gehalt von 1 bis 5 Gew.-% 2,4'-MDI, 44 bis 55 Gew.-% 4,4'-MDI und 40 bis 55 % Mehrkernanteil.

Das Verschäumungsverhältnis Komponente A : Komponente B betrug 100:52 Gew.-Teile, was einer Kennzahl von 100 entspricht.

Die Mischung des PU-Materials erfolgte mittels eines Statikmischers Typ BD 1 (0,6 x 32). Das Gerät hat einen Düsendurchmesser von 6 mm, das verarbeitete Material wird bis zum Austritt an der Düse 32-mal geschert. Bei einer Austragsleistung von ca. 600g/min wurde die Schusszeit inklusive Vor- und Nachlauf auf 10 Sekunden begrenzt.

Anhand von Laborversuchen wurden für oben angegebene Verarbeitung folgende Reaktionszeiten ermittelt: Fadenziehzeit 3 min, Klebfreizeit 3,5 min.

Zur Herstellung von Prüf-Laminaten (Stahlblech/PU/Stahlblech) wurden elektrogalvanisch verzinkte Stahlbleche mit einer Stärke von 0,25 mm und Abmessungen von etwa 20 cm x 30 cm verwendet. Die beiden Bleche wurden einseitig mit einer handelsüblichen Einkomponenten-Grundierungsdispersion (VP 13808, IGP GmbH, D-48249 Dülmen) eingepinselt. Zum Ablüften bzw. Einbrennen der Grundierung wurden die Bleche für ca. 15 min. bei 70°C im Trockenschrank gelagert. Nach dem Abkühlen auf Raumtemperatur wurde die PU-Reaktionsmischung auf die grundierte Seite des einen Blechs aufgetragen und nach Auftragsende sofort mit dem zweiten Blech abgedeckt. Die Schichtdicke des PU-Materials wurde auf 1 mm eingestellt und das Laminat für ca. 15 min. bei Raumtemperatur und anschließend für ca. 30 min. bei ca. 70°C gelagert.

Der Schälwiderstand des erhaltenen Laminats, gemessen nach DIN EN 1464, betrug 45,6 N/cm. Die Verarbeitbarkeit durch Umformen wurde durch einen Biegetest überprüft. Dazu wurde das Laminat um 90° umgebogen und wieder zurück gebogen. Es wurde keine Ablösung des Harzes vom Metall beobachtet.

Zur Ermittlung der mechanischen und thermischen Daten des verwendeten PU-Materials wurden im Labor Prüfplatten hergestellt. Dazu wurden Komponente A und B im Verhältnis 100:52 in ein geeignetes Gefäß eingewogen und 15 sec. lang mittels eines Pendraulik-Rührers bei einer Rührerdrehzahl von 4200 U/min. vermischt. 350 g des Gemischs wurden in ein auf 70°C beheiztes Plattenwerkzeug mit den Abmessungen 200 mm x 200 mm x 10 mm eingefüllt, die Form wurde geschlossen und entlüftet. Ca. 5 min. nach dem Einfüllen konnte die fertige Platte mit einer Rohdichte von ca. 875 kg/m$^3$ entformt werden. Nach 24-stündigem Lagern der Platten bei Raumtemperatur wurden folgende mechanische und thermische Eigenschaften ermittelt:

| DIN 527-1 | Reißfestigkeit bei 20°C [N/mm$^2$] | 7,87 |
| DIN 527-1 | Reißdehnung bei 20°C [%] | 41,38 |
| DIN 527-1 | Zug-E-Modul bei 20°C [N/mm$^2$] | 119 |
| DIN 53423 | Biege-E-Modul bei 20°C [N/mm$^2$] | 61 |
| DIN 53423 | Biege-E-Modul bei 80°C [N/mm$^2$] | 7 |
| DIN 53505 | Härte [Shore D] | 52 |

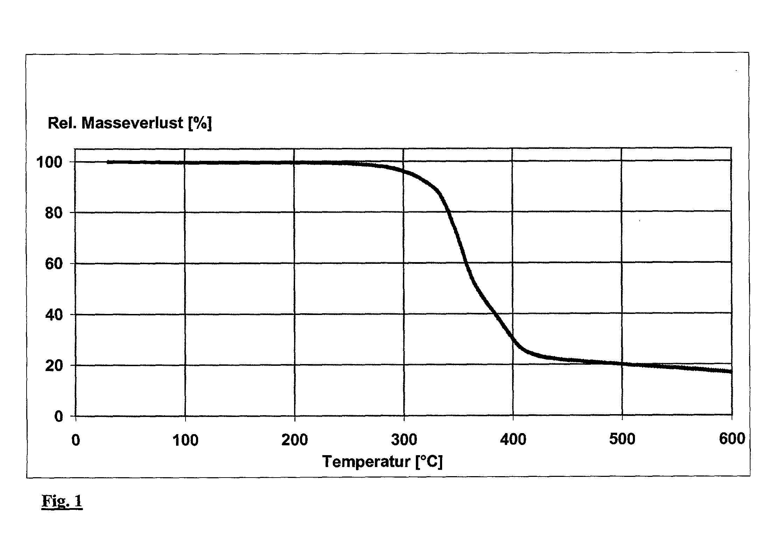

Die Zersetzungstemperatur des PU-Materials wurde thermogravimetrisch mittels TGA bestimmt. Bei einer Heizrate von 20 K/min wurde der Zersetzungsbeginn bei 347°C beobachtet, bei einer Heizrate von 5 K/min bei 326°C. Fig. 1 zeigt die in Stickstoffatmosphäre bei einer Heizrate von 5 K/min erhaltene TGA-Kurve.

**Beispiel 2**

Zur Herstellung eines Laminats wurde folgendes Polyurethan-Reaktionssystem eingesetzt:

Polyolformulierung (Komponente A)

| 69,30 Gew.-Teile | eines glyceringestarteten Polyetherpolyols mit einer zahlenmittleren Molmasse von 6011 g/mol, der 82,3 Gew.-% PO und 17,7 Gew.-% EO enthält, |
| 11,80 Gew.-Teile | eines Trimethylolpropan-gestarteten Polyoxypropylenpolyols mit einer zahlenmittleren Molmasse von 306 g/mol, |
| 10,00 Gew.-Teile | Ethylenglykol |
| 7,80 Gew.-Teile | Polyethylenglykol mit einer zahlenmittleren Molmasse von 600 g/mol, |
| 0,05 Gew.-Teile | Dibutylzinndilaurat, |
| 16,70 Gew.-Teile | eines Füllstoffs vom Wollastonit-Typ |

Die Polyolformulierung hatte eine OH-Zahl von 241.

Isocyanatkomponente (Komponente B)

Roh-MDI mit einem Gehalt von 1 bis 5 Gew.-% 2,4'-MDI, 44 bis 55 Gew.-% 4,4'-MDI und 40 bis 55 % Mehrkernanteil.

Das Verschäumungsverhältnis Komponente A : Komponente B betrug 100:57 Gew.-Teile, was einer Kennzahl von 100 entspricht.

Die Mischung des PU-Materials erfolgte mittels eines Statikmischers Typ BD 1 (0,6 x 32). Das Gerät hat einen Düsendurchmesser von 6 mm, das verarbeitete Material wird bis zum Austritt an der Düse 32-mal geschert. Bei einer Austragsleistung von ca. 600g/min wurde die Schusszeit inklusive Vor- und Nachlauf auf 10 Sekunden begrenzt.

Anhand von Laborversuchen wurden für oben angegebene Verarbeitung folgende Reaktionszeiten ermittelt: Fadenziehzeit 3 min, Klebfreizeit 3,5 min.

Zur Herstellung von Prüf-Laminaten (Stahlblech/PU/Stahlblech) wurden elektrogalvanisch verzinkte Stahlbleche mit einer Stärke von 0,25 mm und Abmessungen von etwa 20 cm x 30 cm verwendet. Die beiden Bleche wurden einseitig mit einer handelsüblichen Einkomponenten-Grundierungsdispersion (VP 13808, IGP GmbH, D-48249 Dülmen) eingepinselt. Zum Ablüften bzw. Einbrennen der Grundierung wurden die Bleche für ca. 15 min. bei 70°C im Trockenschrank gelagert. Nach dem Abkühlen auf Raumtemperatur wurde die PU-Reaktionsmischung auf die grundierte Seite des einen Blechs aufgetragen und nach Auftragsende sofort mit dem zweiten Blech abgedeckt. Die Schichtdicke des PU-Materials wurde auf 1 mm eingestellt und das Laminat für ca. 15 min. bei Raumtemperatur und anschließend für ca. 30 min. bei ca. 70°C gelagert.

Der Schälwiderstand des erhaltenen Laminats, gemessen nach DIN EN 1464, betrug 21,3 N/cm. Die Verarbeitbarkeit durch Umformen wurde durch einen Biegetest überprüft. Dazu wurde das Laminat um 90° umgebogen und wieder zurück gebogen. Es wurde keine Ablösung des Harzes vom Metall beobachtet.

Zur Ermittlung der mechanischen und thermischen Daten des verwendeten PU-Materials wurden im Labor Prüfplatten hergestellt. Dazu wurden Komponente A und B im Verhältnis 100:57 in ein geeignetes Gefäß eingewogen und 15 sec. lang mittels eines Pendraulik-Rührers bei einer Rührerdrehzahl von 4200 U/min. vermischt. 350 g des Gemischs wurden in ein auf 70°C beheiztes Plattenwerkzeug mit den Abmessungen 200 mm x 200 mm x 10 mm eingefüllt, die Form wurde geschlossen und entlüftet. Ca. 5 min. nach dem Einfüllen konnte die fertige Platte mit einer Rohdichte von ca. 875 kg/m$^3$ entformt werden. Nach 24-stündigem Lagern der Platten bei Raumtemperatur wurden folgende mechanische und thermische Eigenschaften ermittelt:

| DIN 527-1 | Reißfestigkeit bei 20°C [N/mm$^2$] | 7,75 |
|---|---|---|
| DIN 527-1 | Reißdehnung bei 20°C [%] | 21,63 |
| DIN 527-1 | Zug-E-Modul bei 20°C [N/mm$^2$] | 222 |
| DIN 53423 | Biege-E-Modul bei 20°C [N/mm$^2$] | 180 |
| DIN 53423 | Biege-E-Modul bei 80°C [N/mm$^2$] | 12,2 |

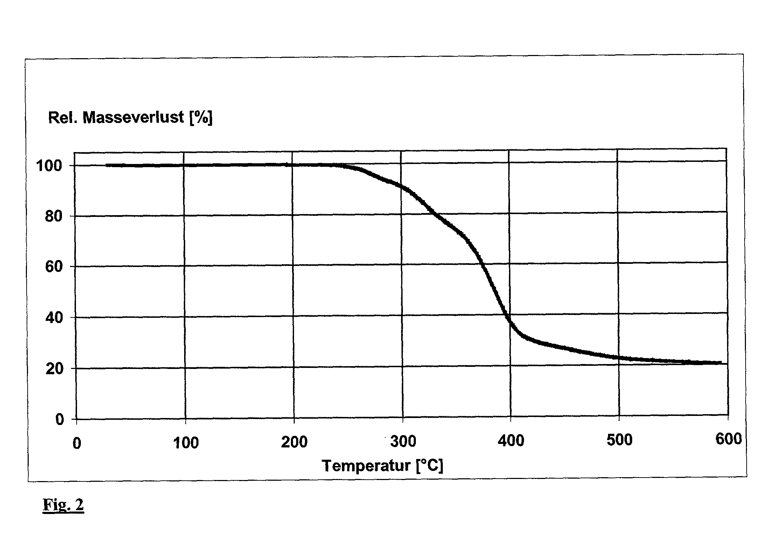

Die Zersetzungstemperatur des PU-Materials wurde thermogravimetrisch mittels TGA bestimmt. Bei einer Heizrate von 20 K/min wurde der Zersetzungsbeginn bei 277°C beobachtet, bei einer Heizrate von 5 K/min bei 253°C. Fig. 2 zeigt die in Stickstoffatmosphäre bei einer Heizrate von 5 K/min erhaltene TGA-Kurve.

**Patentansprüche**

1.  Verbundelemente, die die Schichtfolge

    B1) eine 0,05 bis 1,0 mm dicke Schicht aus Metall,
    A) eine 0,05 bis 10 mm dicke Schicht aus Polyurethanharz,
    B2) eine 0,05 bis 1,0 mm dicke Schicht aus Metall

    aufweisen.

2.  Verbundelement gemäß Anspruch 1, bei dem das Polyurethanharz der Schicht A einen Elastizitätsmodul <250 MPa aufweist.

3.  Verfahren zur Herstellung von Verbundelementen gemäß Anspruch 1, bei dem eine Reaktionsmischung enthaltend

    a) eine Polyisocyanatkomponente,
    b) eine Polyolkomponente, gegebenenfalls
    c) Vernetzer und/oder Kettenverlängerer, gegebenenfalls
    d) Katalysatoren, gegebenenfalls
    e) Wasser als Treibmittel, gegebenenfalls
    f) Füll- und Verstärkungsstoffe und gegebenenfalls
    g) weitere Hilfs- und Zusatzstoffe,

zwischen zwei 0,05 bis 1,0 mm dicke Schichten aus Metall B1 und B2 eingebracht und dort ausgehärtet wird.

4.  Verfahren zur Herstellung von Verbundelementen gemäß Anspruch 3, bei dem die Reaktionsmischung zunächst auf Schicht B 1 aufgebracht und dann mit Schicht B2 abgedeckt wird und die Reaktionsmischung zwischen den Metallschichten B1 und B2 ausgehärtet wird.

5.  Verwendung der Verbundelemente gemäß Anspruch 1 zur Herstellung vom Formteilen für den Kraftfahrzeugbau oder Luftfahrzeugbau.

Fig. 1

Fig. 2

EP 1 316 414 A1

**Europäisches
Patentamt**

**EUROPÄISCHER RECHERCHENBERICHT**

Nummer der Anmeldung

EP 02 02 5571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 692 371 A (ALUSUISSE LONZA SERVICES AG) 17. Januar 1996 (1996-01-17) <br> * Spalte 1, Zeile 39-41 * <br> * Spalte 3, Zeile 39-42 * <br> * Ansprüche 1,5,6,15 * <br> --- | 1,2,5 | B32B15/08 <br> B32B27/40 |
| X | US 3 660 216 A (THEODORSON JERALD W) 2. Mai 1972 (1972-05-02) <br> * Ansprüche 1,11,13,14 * <br> * Abbildung 3 * <br> * Spalte 11, Zeile 18-26 * <br> * Spalte 11, Zeile 56-62 * <br> --- | 1,2 | |
| X | US 6 177 173 B1 (NELSON A DWAYNE) 23. Januar 2001 (2001-01-23) <br> * Abbildung 3 * <br> * Spalte 4, Zeile 35-49 * <br> * Spalte 8, Zeile 54-60 * <br> * Anspruch 1 * <br> --- | 1,3,4 | |
| X | GB 2 066 156 A (UNITEX LTD) 8. Juli 1981 (1981-07-08) <br> * Seite 2, Zeile 12-15 * <br> * Anspruch 1 * <br> ----- | 1 | RECHERCHIERTE SACHGEBIETE (Int.Cl.7) <br><br> B32B |

Der vorliegende Recherchenbericht wurde für alle Patentansprüche erstellt

| Recherchenort | Abschlußdatum der Recherche | Prüfer |
|---|---|---|
| DEN HAAG | 30. Januar 2003 | Stabel, A |

EPO FORM 1503 03 82 (P04C03)

## ANHANG ZUM EUROPÄISCHEN RECHERCHENBERICHT
## ÜBER DIE EUROPÄISCHE PATENTANMELDUNG NR.

EP 02 02 5571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0692371 | A | 17-01-1996 | CH | 687815 A5 | 28-02-1997 |
| | | | CA | 2151786 A1 | 14-01-1996 |
| | | | DE | 59509121 D1 | 03-05-2001 |
| | | | EP | 0692371 A1 | 17-01-1996 |
| US 3660216 | A | 02-05-1972 | KEINE | | |
| US 6177173 | B1 | 23-01-2001 | AU | 4414199 A | 24-01-2000 |
| | | | EP | 1094936 A1 | 02-05-2001 |
| | | | JP | 2002519607 T | 02-07-2002 |
| | | | WO | 0001524 A1 | 13-01-2000 |
| GB 2066156 | A | 08-07-1981 | KEINE | | |

EPO FORM P0461

Für nähere Einzelheiten zu diesem Anhang : siehe Amtsblatt des Europäischen Patentamts, Nr.12/82